(19) Europäisches Patentamt
European Patent Office
Office européen des brevets

(11) Numéro de publication: 0 338 947
A1

# (12) DEMANDE DE BREVET EUROPEEN

(21) Numéro de dépôt: 89420138.3

(22) Date de dépôt: 18.04.89

(51) Int. Cl.⁴: C 08 L 83/04
C 08 K 5/57, C 09 J 7/04

(30) Priorité: 21.04.88 FR 8805555

(43) Date de publication de la demande:
25.10.89 Bulletin 89/43

(84) Etats contractants désignés:
AT BE CH DE ES FR GB GR IT LI LU NL SE

(71) Demandeur: RHONE-POULENC CHIMIE
25, quai Paul Doumer
F-92408 Courbevoie Cédex (FR)

(72) Inventeur: Frances, Jean-Marc
9, Avenue Condorcet
F-69100 Villeurbanne (FR)

Gouron, Véronique
E4 - Appartement 396 Hameau de Noailles
F-33400 Talence (FR)

Jousseaume, Bernard
3, Clos du Haut Carré
F-33400 Talence (FR)

Pereyre, Michel
45, rue du Haut-Carré
F-33400 Talence (FR)

(74) Mandataire: Seugnet, Jean Louis et al
RHONE-POULENC CHIMIE Service Brevets Chimie
Centre de Recherches des Carrières B.P. 62
F-69192 Saint-Fons Cédex (FR)

## (54) Composition polyorganosiloxane contenant un catalyseur latent à l'étain et reticulable en couche mince.

(57) La présente invention concerne une composition polyorganosiloxane contenant un catalyseur à l'étain at réticulable en couche mince comportant :

A. - un polydiorganosiloxane à extrémités silanol,

B. - un polydiorganohydrogénosiloxane,

C. - un catalyseur latent à l'étain de formule :

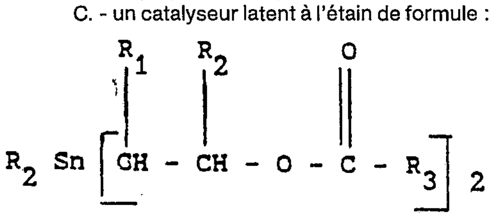

(1)

La composition peut être sans solvant, en solution dans un solvant organique ou en émulsion aqueuse. Elle est réticulée par chauffage à une température au moins égale à la température de décomposition du catalyseur latent et est utile en particulier à l'enduction du papier.

EP 0 338 947 A1

## Description

# COMPOSITION POLYORGANOSILOXANE CONTENANT UN CATALYSEUR LATENT A L'ETAIN ET RETICULABLE EN COUCHE MINCE

La présente invention concerne une composition organopolysiloxane contenant un catalyseur latent à l'étain et réticulable en couche mince.

Ce type de composition est bien connu et réticule en présence de catalyseur à l'étain ou au platine (C) par réaction de polycondensation entre un polydiorganosiloxane (A) à extrémités silanol et un polydiorganosiloxane (B) présentant au moins trois groupes SiH (hydrure de silicium) par molécule.

Ces compositions, généralement exemptes de charges minérales, sont utilisables pour l'obtention de revêtement élastomère antiadhérent et/ou hydrofuge sur des substrats (supports) divers, en particulier sur du papier et des pellicules en matière plastique telle que polyoléfine, polyester, cellulose régénérée ou même en métal ou analogues en vue de déposer un revêtement silicone (couche mince) dont l'épaisseur peut varier entre environ 1 µm et quelques mm.

Les compositions industrielles connues se divisent en trois grandes familles :

- les compositions sans solvant dans lesquelles les polymères (A) et (B) sont utilisés en masse, c'est-à-dire substantiellement sans solvant organique. Des compositions de ce type sont notamment décrites dans les brevets britanniques GB-A-1 374 792 et GB-A-1 504 716 où le catalyseur (C) est un composé du platine. Le mélange des polymères (A) et (B) doivent alors présenter une viscosité inférieure à environ 5 000 mPa.s à 25 °C.
- les compositions en solution dans un solvant organique dans lesquelles les polymères (A) et (B) peuvent présenter des viscosités très importantes ce qui peut améliorer la qualité du revêtement. Le solvant est alors éliminé par chauffage lors de la réticulation. De telles compositions contenant un catalyseur à l'étain (C) sont par exemple décrites dans les brevets US-A-3 061 567 et GB-A-1 504 716.
- les compositions en émulsions aqueuses contiennent en plus des trois constituants (A), (B) et (C) de l'eau et un agent émulsifiant. L'eau est éliminée par chauffage lors de la réticulation. Des compositions de ce type sont par exemple décrites dans les brevets américains US-A-4 127 460, US-A-4 288 356 et US-A-4 624 900.

Toutes les compositions connues du type précité présentent la particularité de n'être pas stables au stockage suffisamment longtemps. C'est pourquoi elles se présentent toutes commercialement en au moins deux composants (ou deux emballages) que l'utilisateur mélange extemporanément. Après mélange, la composition présente un "pot-life" (vie en pot) qui n'est généralement pas supérieur à 48 heures.

Il apparaît clairement à l'homme de métier que ce conditionnement en au moins deux emballages constitue une contrainte à la fois pour le fabricant et surtout pour l'utilisateur de la composition.

En effet en effectuant le mélange, l'utilisateur peut en particulier faire une erreur de dosage et/ou préparer trop de mélange pour ses besoins réels, ce qui conduit à une perte de produit qui gélifie et devient donc inutilisable une fois la durée du "pot-life" expirée.

Le but principal de la présente invention est précisément de proposer une composition du type ci-dessus qui comporte un catalyseur latent à l'étain qui soit inactif à température ambiante et qui devienne actif par élévation de température.

Un autre but de la présente invention est de proposer une composition du type ci-dessus, qui présente une "vie en pot" d'une durée améliorée, de préférence supérieure à 48 heures.

Un autre but de la présente invention est de proposer une composition du type ci-dessus qui, dans ses meilleurs modes de réalisation, puisse être présentée en un seul emballage avec une stabilité au stockage supérieure à 6 mois.

Un autre but de la présente invention est de proposer une composition du type ci-dessus qui réticule à une température comprise entre 50 et 200 °C, de préférence entre 60 et 180 °C, en un revêtement élastomère présentant les propriétés d'antiadhérence et/ou d'hydrofugation souhaitées.

Ces buts et d'autres sont atteints par la présente invention qui concerne en effet une composition polyorganosiloxane caractérisée en ce qu'elle comporte :

A. - 100 parties en poids d'un polydiorganosiloxane à extrémités silanol,

B. - 0,1 à 25 parties en poids d'un polyorganohydrogénosiloxane ayant au moins 3 groupes SiH par molécule,

C. - une quantité catalytiquement efficace d'un catalyseur latent à l'étain de formule :

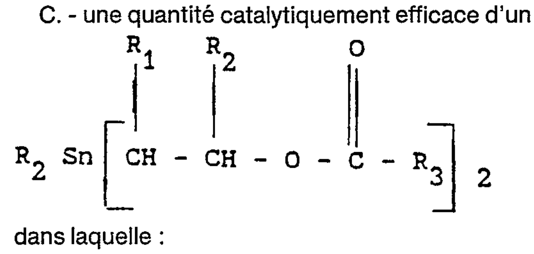

(1)

dans laquelle :

- les radicaux R, identiques ou différents, sont choisis parmi un radical alkyle linéaire ou ramifié en $C_1$-$C_{20}$, un radical aryle mononucléaire, arylalkyle et alkylaryle, dont la partie alkyle est en $C_1$-$C_6$,
- les radicaux $R_1$ et $R_2$, identiques ou différents, sont choisis parmi un atome d'hydrogène, un radical

cyano et un radical alkyle en $C_1$-$C_6$, un radical alcoxycarbonyle dont la partie alkyle est en $C_1$-$C_6$ et $R_1$ et $R_2$ peuvent former ensemble un cycle hydrocarboné saturé ayant de 5 à 8 atomes de carbone,
- le radical $R_3$ est choisi parmi un atome d'hydrogène et un radical alkyle en $C_1$-$C_{20}$ linéaire ou ramifié.

Dans le cadre de la présente invention les radicaux R, $R_1$, $R_2$ et $R_3$ préférés sont les suivants :
- R : butyle, octyle et phényle,
- $R_1$ : H,
- $R_2$ : H, méthyle et cyano,
- $R_3$ : H, méthyle, undécanoyle, éthyl-2 pentyle et nonyle.

Les produits préférés répondant à la formule (1) sont les suivants :
- bis(acétoxy-2 éthyl) dibutylétain, formule (1) : R = butyle, $R_1$ = $R_2$ = H, $R_3$ = méthyle,
- bis(acétoxy-2 éthyl) dioctylétain, formule (1) : R = octyle, $R_1$ = $R_2$ = H, $R_3$ = méthyle,
- bis(lauroyloxy-2 éthyl) dibutylétain, formule (1) : R = butyle, $R_1$ = $R_2$ = H, $R_3$ = undécanoyle,
- bis(lauroyloxy-2-éthyl)dioctylétain, formule (1) : R = octyle, $R_1$ = $R_2$ = H, $R_3$ = undécanoyle,
- bis [(éthyl-2 hexanoyloxy)-2 éthyl] dibutylétain, formule (1) : R = butyle, $R_1$ = $R_2$ = H, $R_3$ éthyl-2 pentyle,
- bis [(éthyl-2 hexanoyloxy)-2 éthyl] dioctylétain, formule (1) : R = octyle, $R_1$ = $R_2$ = H, $R_3$ = éthyl-2 pentyle,
- bis(décanoyloxy-2 éthyl) dibutylétain, formule (1) : R = butyle, $R_1$ = $R_2$ = H, $R_3$ = nonyle (dont le carbone en position 1 est quaternaire),
- bis(acétoxy-2 méthyl-2 éthyl) dibutylétain, formule (1) : R = butyle, $R_1$ = H, $R_2$ = $R_3$ = méthyle,
- bis(acétoxy-2 cyano-2 éthyl) dibutylétain, formule (1) : R = butyle, $R_1$ = H, $R_2$ = CN, $R_3$ = méthyle,
- bis(formyloxy-2 éthyl) dibutylétain, formule (1) : R = butyle, $R_1$ = $R_2$ = $R_3$ = H,
- bis(acétoxy-2 éthyl) diphénylétain, formule (1) : R = phényle, $R_1$ = $R_2$ = H, $R_3$ = méthyle,
- bis(lauroyloxy-2 éthyl) diphénylétain, formule (1) : R = phényle, $R_1$ = $R_2$ = H, $R_3$ = undécanoyle.

Les composés de formule (1) peuvent être préparés par réaction d'addition d'un dihydrure de diorganoétain de formule (2) :

$R_2\ Sn\ H_2$ (2)

dans laquelle les radicaux R, identiques ou différents, ont la même signification qu'à la formule (1) ci-dessus sur un carboxylate d'énol de formule (3) :

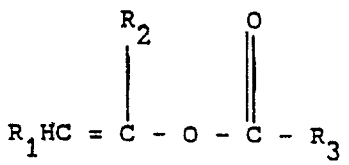

(3)

dans laquelle les radicaux $R_1$, $R_2$ et $R_3$ ont la même signification qu'à la formule (1) ci-dessus.

Les dihydrures de formule (2) sont, pour la plupart, connus et décrits dans la littérature. Dans le cas où ce sont des produits nouveaux, ils peuvent être obtenus par réduction du dichlorure de diorganoétain correspondant par l'hydrure de lithium-aluminium.

Un autre procédé consiste à réduire l'oxyde de diorganoétain correspondant par un polydiorganosiloxane porteur de fonction SiH comme par exemple un polyhydrogénométhylsiloxane bloqué à chaque extrémité par un groupe triméthylsilyle.

Les carboxylates de formule (3) sont, pour la plupart connus et décrits dans la littérature.

Les carboxylates de vinyle de formule

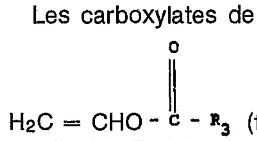

(formule (3) : $R_1$ = $R_2$ = H) sont obtenus par transestérification de l'acétate de vinyle sur l'acide $R_3COOH$ en milieu acide.

Les carboxylates d'énol de formule :

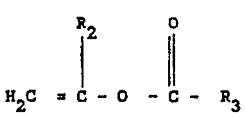

(formule (3) : $R_1$ = H, $R_3$ = $CH_3$) sont obtenus par réaction de la cétone $H_3C-COR_2$ sur l'acétate d'isopropényle en milieu acide.

La réaction d'hydrostannation d'un produit de formule (2) sur un produit de formule (3) est de préférence mise en oeuvre par réaction d'une mole de produit de formule (2) sur deux moles de produit de formule (3) à température ambiante au sein d'un solvant organique hydrocarboné tel que le cyclohexane. Le mélange réactionnel est soumis à un rayonnement U.V. (360 nm).

La réaction d'hydrostannation peut également être effectuée sans solvant en présence d'un générateur de radicaux libres comme par exemple en présence d'AIBN (azobisisobutyronitrile) à une température de 70-80 °C.

Les composés d'étain de formule (1), qui sont généralement des liquides à température ambiante, peuvent être identifiés par les techniques analytiques de spectroscopie I.R. (infra-rouge) et R.M.N. (résonance

magnétique nucléaire $^{119}Sn$, $^{13}C$ et $^{1}H$) ainsi que par spectroscopie de masse et par la mesure de l'effet MOSSBAUER.

Il s'avère toutefois qu'en l'état actuel des connaissances des techniques analytiques, la méthode analytique R.M.N. $^{119}Sn$, telle que décrite, en particulier dans l'article de Peter J. SMITH "CHEMICAL SHIFTS OF $^{119}Sn$ NUCLEI IN ORGANOTIN COMPOUNDS", page 291 et suivantes, publié dans ANNUAL REPORTS ON NMR SPECTROSCOPY, volume 8, 1978 ACADEMIC PRESS, est une méthode qui est à elle seule suffisamment précise pour caractériser les différents composés de l'étain présents au sein d'un mélange, en particulier d'un mélange réactionnel, et pour permettre de trouver les formules chimiques de la plupart de ces composés.

Le paramètre fondamental évalué par la R.M.N. $^{119}Sn$ est la valeur du déplacement chimique exprimé en partie par millions relatif à une référence (généralement le tétraméthylétain).

La valeur du déplacement chimique $\delta$ est notamment sensible à l'électronégativité des groupements portés par l'étain et à la variation du nombre de coordinence de l'atome d'étain. Des travaux spécifiques de caractérisation de dérivés organostanniques à partir de la R.M.N. $^{119}Sn$ sont notamment décrites par A.G. DAVIES et P.J. SMITH, COMPREHENSIVE ORGANO-METALLIC CHEMISTRY 11 TIN, pages 523 à 529 et par J. OTERA J. OF. ORGANOMET. CHEM. 221, pages 57-61 (1981).

Les composés de formule (1) sont stables à température ambiante et sont inactifs comme catalyseurs de durcissement de compositions organopolysiloxanes.

Par contre les produits de formule (1) soumis à une élévation de température se décomposent thermiquement en composés bien connus à savoir les diorganodicarboxylates d'étain correspondant avec dégagement du composé organique à insaturation alcénique correspondant suivant l'équation :

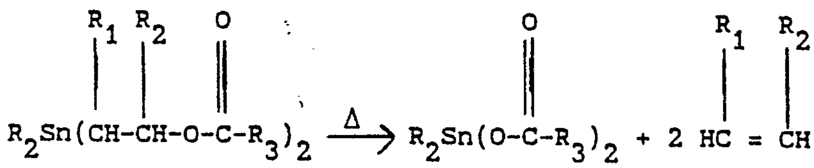

La décompostion thermique des produits de formule (1) intervient à une température spécifique à chacun des produits. Cette température est généralement comprise entre 50 et 250 °C.

Le diorganodicarboxylate d'étain libéré est alors un catalyseur actif de durcissement de compositions organopolysiloxanes.

L'avantage des catalyseurs latents de formule (1) est donc de pouvoir mélanger les produits de départ avec le catalyseur latent sans qu'il y ait catalyse de la réaction et de déclencher la catalyse de la réaction par chauffage du mélange à la température de décomposition du catalyseur latent.

La présente invention vise donc également un procédé de réticulation de composition polyorganosiloxane selon lequel on mélange à température ambiante les polymères (A) et (B) et une quantité catalytiquement efficace d'un catalyseur latent (C) de formule (1) et on porte le mélange à une température égale ou supérieure à lat température de décomposition thermique du catalyseur latent avec évaporation éventuelle du solvant ou de l'eau, présents dans le mélange.

La température décomposition du catalyseur est généralement comprise entre 60 et 200 °C. Elle dépend du catalyseur latent particulier utilisé et de la présentation de la composition polyorganosiloxane.

Cette température de décomposition peut être abaissée par addition d'une quantité efficace d'un agent nucléophile choisi, par exemple, parmi l'eau, une amine organique secondaire, un alcool organique, un composé organosilicié à fonction silanol et un composé organique à fonction mercapto (SH). Par quantité efficace d'agent nucléophile on entend de 0,001 à 10 moles et plus d'agent nucléophile par mole de composé à l'étain de formule (1).

Ainsi pour les compositions polyorganosiloxanes sans solvant et en solution dans un solvant organique cette température de décomposition est voisine de la température de décomposition intrinsèque spécifique du catalyseur latent. Pour ces deux types de compositions il est souvent possible de conditionner les compositions en un seul emballage avec une durée de stabilité au stockage pouvant être supérieure à 6 mois.

Par contre pour les compositions en émulsion aqueuse, cette température de décomposition peut être abaissée dans certains cas jusqu'à la température ambiante. Il est alors généralement souhaitable de conditionner l'émulsion en au moins deux emballages et dans ce cas, la durée de "vie en pot" de la composition est sensiblement améliorée par rapport à celle des compositions comportant un catalyseur à l'étain connu (en particulier les dicarboxylates de dialkylétain).

Par quantité efficace de catalyseur latent on entend généralement selon l'invention, une teneur de 0,001 à 6 parties, de préférence de 0,01 à 3 parties (calculées en poids d'étain métal), de catalyseur latent de formule (1) pour 100 parties en poids d'extraits secs de la somme des polymères (A) et (B).

Les compositions de revêtement selon l'invention ne comportant pas généralement de charges minérales. Toutefois la présence de charges, de préférence siliceuses (silice de précipitation, silice de combustion, terres de diatomées, quartz broyé, etc ....), utilisées généralement dans les compositions élastomères de silicone n'est pas exclue à la teneur de 1 à 50 parties de charge pour 100 parties de polymère (A).

Les polymères (A) et (B) sont connus depuis longtemps et sont décrits en particulier dans les brevets précités.

Les polymères (A) peuvent être choisis parmi les polydiméthylsiloxanes à groupes hydroxyle terminaux (à extrémités silanol), de viscosité d'au moins 10 mPa.s à 25 °C. Ces polymères (A) comprennent les huiles peu visqueuses allant par exemple de 10 mPa.s à 5 000 mPa.s, les huiles visqueuses de 5 000 à $10^6$ mPa.s et les gommes de viscosité supérieure à $10^6$ mPa.s.

Les polymères (B) peuvent être linéaires, cycliques ou ramifiés.

Les polymères (B) sensiblement linéaires ou ramifiés possèdent des motifs de formule générale moyenne :

$$R_xH_ySiO_{\frac{4-x-y}{2}} \qquad (4)$$

dans laquelle les radicaux R, identiques ou différents, ont la signification indiquée plus haut, mais la possibilité pour certains radicaux R de représenter des radicaux vinyle n'étant pas exclue. De préférence au moins 80 % des radicaux R sont des radicaux méthyle.

Le symbole x représente un nombre quelconque allant de 1 à 1,99, le symbole y représente un nombre quelconque allant de 1,1 à 0,7, la somme x + y allant de 1,7 à 2,6. De préférence sont utilisés comme organohydrogénopolysiloxanes (B) des méthylhydrogénopolysiloxanes.

Quant aux polymères ramifiés (B) ils sont constitués chacun d'une combinaison de motifs choisis parmi ceux de formules $R_3SiO_{0,5}$, $R_2SiO$, $RSiO_{1,5}$, $SiO_2$, $HR_2SiO_{0,5}$, $HRSiO$, $HSiO_{1,5}$, chaque combinaison qui définit un polymère renferme au moins un motif choisi parmi ceux de formules $RSiO_{1,5}$, $SiO_2$, $HSiO_{1,5}$, les motifs étant cependant répartis d'une manière telle que la formule moyenne, ramenée à un silicium, de chaque polymère est englobée dans la formule générale moyenne précitée.

La viscosité de ces polymères s'étale de 2 mPa.s à 25 °C à 10 000 mPa.s à 25 °C.

Dans le cas où la composition est utilisée sans solvant, la viscosité des polymères (A) et (B) est choisie de telle sorte que la viscosité du mélange, c'est-à-dire de la composition, soit comprise entre 40 et 5 000 mPa.s, de préférence entre 100 et 3 000 mPa.s à 25 °C.

Les compositions selon l'invention peuvent être émulsionnées, dispersées ou diluées dans l'eau ou mises en solution dans un solvant organique volatile compatible avec la composition, choisi par exemple parmi les alcanes, les coupes pétrolières renfermant des composés paraffiniques, le toluène, l'heptane, le xylène, l'isopropanol, la méthylisobutylcétone, le tétrahydrofuranne, le chlorobenzène, le chloroforme, le 1,1,1-trichloroéthane, les dérivés du monoéthylèneglycol et de méthylèneglycol.

De préférence, l'eau ou le solvant forme au moment de l'emploi de 50 à 90 % en poids de la dispersion ou de la solution.

Lors du traitement de réticulation impliquant l'évaporation de l'eau ou du solvant, la composition durcit et elle est donc utile comme composition de revêtement pour des supports souples en métal, papier, matière plastique, carton, etc .....

Les compositions selon l'invention sont de préférence utilisées comme compositions pour rendre un matériau non adhérent tel que des feuilles métalliques, du verre, des matières plastiques ou du papier, à d'autres matériaux auxquels il adhérerait normalement.

L'invention vise donc également un procédé permettant de rendre des feuilles de matériau souple non adhérentes à des surfaces auxquelles elles adhèrent normalement, procédé caractérisé en ce qu'il consiste à appliquer une quantité de composition conforme à l'invention comprise généralement entre 0,1 et 10 g par $m^2$ de surface à enduire et à réticuler la composition par chauffage comme indiqué ci-dessus.

Les temps de gélification ("pot-life" durée de vie en pot) de ces compositions diluées ou non à température ambiante peuvent être supérieurs à plusieurs semaines, le plus souvent plusieurs mois.

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier deux cylindres superposés : le rôle du cylindre placé le plus bas, plongeant dans le bac d'enduction où se trouvent les compositions, est d'imprégner en une couche très mince le cylindre placé le plus haut, le rôle de ce dernier est alors de déposer sur le papier les quantités désirées des compositions dont il est imprégné, un tel dosage est obtenu par règlage de la vitesse respective des deux cylindres qui tournent en sens inverse l'un de l'autre. La machine d'enduction décrite dans le brevet français FR-A-2 294 765 est également utilisable.

Les compositions diluées, c'est-à-dire avec solvant ou en émulsion aqueuse peuvent être appliquées à l'aide des dispositifs utilisés sur les machines industrielles d'enduction du papier telles que le cylindre gravé "Mille points", le système nommé "Reverse Roll". Une fois déposées sur les supports, les compositions sont durcies par apport d'énergie, dont au moins une partie peut être fournie par un rayonnement U.V., en quelques secondes par circulation sous une lumière U.V. et dans des fours-tunnels chauffés vers 60-200 °C ; le temps de passage dans ces fours varie généralement de 2 à 30 secondes. Il est fonction, pour une longueur donnée des fours, de la vitesse à laquelle circulent les supports enduits (cette vitesse peut dépasser 200 mètres par minute).

Les quantités de compositions déposées sur les supports sont variables et s'échelonnent le plus souvent entre 0,1 et 10 g/$m^2$ de surface traitée. Ces quantités dépendent de la nature des supports et des propriétés antiadhérentes recherchées. Elles sont le plus souvent comprises entre 0,5 et 1,5 g/$m^2$ pour des supports non poreux.

Bien entendu les compositions en émulsions aqueuses conditionnées généralement en une partie (I) contenant (A) et (C) et une partie (II) contenant (B), comportent les agents émulsifiants ou de dispersion usuels qui peuvent être anioniques, non anioniques ou cationiques.

Les matériaux polymères non ioniques tels que l'alcool polyvinylique (RHODOVIOL ® 25/140 de RHONE-POULENC, ou l'ELVANOL ® 50-42 de DUPONT) conviennent particulièrement pour la partie (I).

Par ailleurs les alkyl-éthers et les alkylphényl-éthers de polyalkylèneglycols (par exemple le CEMULSOL ® O.N. 10-20 de RHONE-POULENC ou le TERGITOL ® NP-40 de UNION CARBIDE) conviennent plus particulièrement pour la partie (II).

Dans ce qui suit et ce qui précède toutes les viscosités sont mesurées à 25 °C, les parties et pourcentages, sauf mentions contraires, sont en poids.

Les exemples suivants illustrent l'invention sans en limiter la portée.

- EXEMPLE 1 :

Préparation et décomposition du bis(acétoxy-2 éthyl)dibutylétain :

a) - Préparation du dihydrure de dibutylétain : $(C_4H_9)_2\ Sn\ H_2$

Dans un ballon de 1 litre à trois tubulures, on introduit 10,35 g d'hydrure de lithium-aluminium sur lequel on ajoute goutte-à-goutte 250 ml d'éther anhydre sous azote et avec agitation magnétique, 52,1 g de dichlorure de dibutylétain, dissous dans 100 ml d'éther anhydre, sont ensuite ajoutés goutte-à-goutte. La réaction est exothermique. A la fin de l'addition, le mélange réactionnel est porté à reflux pendant 2 heures 30.

Ensuite, 500 mg d'hydroquinone et 100 ml de pentane sont ajoutés successivement. Le mélange est alors refroidi à 0 °C puis hydrolysé lentement.

La phase organique est récupérée, séchée sur sulfate de magnésium. Les solvants sont éliminés sous un vide de 2,7 KPa à température ambiante.

Le dihydrure de dibutylétain est distillé sous un vide de 0,0013 KPa à = 35 °C en tête de colonne.

Le rendement de la réaction est de 70 % en dihydrure de dibutylétain : $(C_4H_9)_2\ Sn\ H_2$ Eb = 35 °C sous 0,0013 KPa

Caractéristiques spectrales :

RMN $^1H$ (pur) $\delta$ (ppm) = 4,6 (2 H, m) ; 1,65 - 0,9 (18 H, m)

RMN $^{119}Sn$ ($C_6D_6$, $(CH_3)_4Sn$ interne) $\delta$ = 204,0 ppm ;

$|^1J(SnH)|$ = 1676 Hz ; $|^2J(SnH)|$ = 56 Hz

IR (film) : ν(SnH) = 1840 $cm^{-1}$ (F)

b) - Préparation du bis(acétoxy-2 éthyl)dibutylétain :

Dans une cuve en pyrex ® thermostatée à 25 °C, sont placés 2,349 g (0,01 mole) de dihydrure de dibutylétain, 1,722 g (0,02 mole) d'acétate de vinyle distillée, et 2 g de cyclohexane anhydre. La solution est exposée aux rayons ultraviolets pendant 3 heures. Le cyclohexane est ensuite éliminé sous vide à température ambiante. Le produit attendu est obtenu pur avec un rendement quantitatif.

Ce mode opératoire est le même dans tous les cas d'addition du dihydrure de dibutylétain sur un composé insaturé. Seuls peuvent varier la température et le temps d'exposition.

Le produit obtenu a la formule suivante :

$(C_4H_9)_2\ Sn(CH_2CH_2OCOCH_3)_2$

Caractéristiques spectrales:

RMN $^1H$ ($CCl_4$, TMS int) $\delta$ (ppm) = 4,7 - 3,75 (4 H, m) ; 1,95 (6 H, s) ; 1,7 - 0,9 (22 H, m)

RMN $^{119}Sn$ ($C_6D_6$, $(CH_3)_4Sn$ interne) $\delta$ = - 19,8 ppm ;

IR (film) : ν(CO) = 1740 $cm^{-1}$ (F)

c) - Décomposition du bis(acétoxy-2 éthyl)dibutylétain :

1,84 g de bis(acétoxy-2 éthyl)dibutylétain sont placés dans un tube à essai relié à une cuve à eau. Le tube est placé dans un bain d'huile thermostaté à 110 °C. Au bout de 2 heures 30, 200 $cm^3$ de gaz sont récupérés et identifiés par spectroscopie IR ; le spectre de ce gaz est identique à celui de l'éthylène (bande caractéristique fine et intense à 950 $cm^{-1}$). Le liquide issu de la décomposition du produit de départ (1,59 g) est distillé sous un vide de 0,013 KPa à 90 °C en tête de colonne. Le produit obtenu est le diacétate de dibutylétain de formule :

$(C_4H_9)_2\ Sn(OCOCH_3)_2$ Eb = 90 °C sous 0,013 KPa

Caractéristiques spectrales :

RMN $^1H$ ($CCl_4$, TMS int) $\delta$ (ppm) = 2,0 (6 H, s) ; 1,65 - 0,9 (18 H, m)

RMN $^{119}Sn$ ($C_6D_6$, $(CH_3)_4Sn$ interne) $\delta$ = - 156,3 ppm ;

IR (film) : ν(CO) = 1605 ; 1570 ; 1425 $cm^{-1}$ (F)

- EXEMPLE 2 :

Préparation et décomposition du bis(acétoxy-2 éthyl)dioctylétain :

Cette préparation nécessite la synthèse préalable du dihydrure de dioctylétain $(C_8H_{17})_2$ Sn $H_2$.

a) - Préparation du dihydrure de dioctylétain :

Le mode opératoire suivi est le même que celui utilisé à l'exemple 1 pour la synthèse du dihydrure de dibutylétain, sauf que l'on part de dichlorure de dioctylétain.

Le produit est obtenu pur après distillation au kugelrohr, sous un vide de $2.10^{-2}$ KPa, à 90 °C (température du four).

Caractéristiques spectrales :

RMN$^1$H (pur) δ (ppm) = 4,6 (2 H, m) ; 1,65 - 0,9 (34 H, m).

b) - Préparation du bis(acétoxy-2 éthyl)dioctylétain :

Le produit est obtenu de la même façon que son homologue en série dibutylée : le bis(acétoxy-2 éthyl)dibutylétain de l'exemple 1.

La formule du produit est la suivante :

$(C_8H_{17})_2$ Sn $(CH_2CH_2OCOCH_3)$

Caractéristiques spectrales :

RMN $^1$H ($CCl_4$, TMS int) δ (ppm) = 4,65 - 3,7 (4 H, m) ; 1,95 (6 H, s) ; 1,65 - 0,9 (38 H, m)

RMN $^{119}$Sn ($C_6D_6$, $(CH_3)_4$Sn interne) δ = - 20,4 ppm ;

c) - Décomposition du bis(acétoxy-2 éthyl)dioctylétain :

La décomposition du produit pur est terminée au bout de 3 heures à 110 °C.

Le produit obtenu est le diacétate de dioctylétain de formule :

$(C_8H_{17})_2$ Sn $(OCOCH_3)_2$

Caractéristiques spectrales :

RMN $^1$H ($CCl_4$, TMS int) δ (ppm) = 2,0 - 0,9 (40 H, m) ;

RMN $^{119}$Sn ($C_6D_6$, $(CH_3)_4$ interne) δ = - 156,8 ppm.

- EXEMPLE 3 :

Préparation et décomposition du bis(lauroyloxy-2 éthyl)dibutylétain :

a) - Préparation du laurate de vinyle :

Dans un ballon de 100 ml à deux tubulures, sont introduits 51,5 g d'acétate de vinyle et 20 g (0,1 mole) d'acide laurique. L'acide est dissous à chaud, 0,4 g d'acétate mercurique est ajouté sous courant d'azote. Le mélange est ainsi laissé sous agitation magnétique, 30 minutes, à température ambiante, sous azote. Deux gouttes d'acide sulfurique (95 %) sont alors ajoutées et le mélange réactionnel est porté à reflux pendant 3 heures. On le laisse ensuite revenir à température ambiante, puis on ajoute 0,21 g d'acétate de sodium.

L'excès d'acétate de vinyle est récupéré par distillation à pression atmosphérique.

Le laurate de vinyle est distillé sous vide de 0,013 KPa à 94 °C en tête de colonne.

Le produit est obtenu avec un rendement de 70 %. Sa formule est la suivante :

$H_2C = CHOCOC_{11}H_{23}$ Eb = 94 °C sous 0,013 KPa

Caractéristiques spectrales :

RMN $^1$H ($CCl_4$, TMS int) δ (ppm) = 7,2 (1 H, dd) ; 4,75 (1 H, dd) ; 4,45 (1 H, dd) ; 2,3 (2 H, t) ; 1,9 - 0,9 (21 H, m).

b) - Préparation du bis(lauroyloxy-2 éthyl)dibutylétain :

Le mode opératoire suivi est le même qu'à l'exemple 1. L'acétate de vinyle est remplacé par 4,526 g (0,02 mole) de laurate de vinyle. La solution est exposée 4 heures aux rayons ultra-violets.

Le produit obtenu quantitativement, a la formule suivante :

$(C_4H_9)_2$ Sn $(CH_2CH_2OCOC_{11}H_{23})_2$

Caractéristiques spectrales :

RMN $^1$H ($CCl_4$, TMS int) δ (ppm) = 4,65 - 3,75 (4 H,m) ; 2,2 (4 H, t) ; 1,9 -0,9 (4 H, m)

RMN $^{119}$Sn ($C_6D_6$, $(CH_3)_4$Sn interne) δ = - 20,0 ppm ;

IR (film) : ν(CO) = 1740 $cm^{-1}$ (F).

c) - Décomposition du bis(lauroyloxy-2 éthyl)dibutylétain :

La décomposition est faite comme à l'exemple 1. A 140 °C, elle est terminée au bout de 2 heures 30.

Le produit de décomposition est identifié comme étant le dilaurate de dibutylétain de formule :

$(C_4H_9)_2$ Sn $(OCOC_{11}H_{23})_2$

Caractéristiques spectrales :
RMN $^1H$ ($CCl_4$, TMS int) δ (ppm) = 2,2 (4 H, t) ; 1,6 - 0,9 (60 H, m)
RMN $^{119}Sn$ ($C_6D_6$, $(CH_3)_4Sn$ interne) δ = 152,5 ppm.

- EXEMPLE 4 :

Préparation et décomposition du bis(lauroylocy-2 éthyl)dioctylétain :

a) - Préparation du bis(lauroyloxy-2 éthyl)dioctylétain :
Le produit est obtenu par hydrostannation du laurate de vinyle. La solution est exposée 7 heures aux rayons ultra-violets. Le produit a la formule suivante :
$(C_8H_{17})_2$ Sn $(CH_2CH_2OCOC_{11}H_{23})_2$

Caractéristiques spectrales :
RMN $^1H$ ($CCl_4$, TMS int) δ (ppm) = 4,6 - 3,9 (4 H, m) ; 2,4 - 0,9 (84 H, m)
RMN $^{119}Sn$ ($C_6D_6$, $(CH_3)_4Sn$ interne) δ = - 20,6 ppm.

b) - Décomposition du bis(lauroyloxy-2 éthyl)dioctylétain :
Elle se fait dans les mêmes conditions que celle du bis(lauroyloxy-2 éthyl)dibutylétain et conduit au dilaurate de dioctylétain :
$(C_8H_{17})_2$ Sn $(OCOC_{11}H_{23})_2$

Caractéristiques spectrales :
RMN $^1H$ ($CCl_4$, TMS int) δ (ppm) = 2,4 - 0,9 (80 H, m).

- EXEMPLE 5 :

Préparation et décomposition du bis [(éthyl-2 hexanoyloxy)-2 éthyl] dibutylétain :

a) - Préparation du bis [(éthyl-2 hexanoyloxy)-2 éthyl] dibutylétain :
Dans un tube en pyrex®, sont placés 2,349 g (0,01 mole) de dihydrure de dibutylétain, 3,405 g (0,02 mole) d'éthyl-2 hexanoate de vinyle distillé et 2,5 g de cyclohexane anhydre. L'exposition aux rayons ultra-violets dure 8 heures 30 à 30-35 °C. Le solvant est éliminé sous vide à température ambiante.
Le produit de la réaction, obtenu quantitativement, est le suivant :
$(C_4H_9)_2$ Sn $[CH_2CH_2OCOCH(C_2H_5)(C_4H_9)]_2$

Caractéristiques spectrales :
RMN $^{16}H$ ($CCl_4$, TMS int) δ (ppm) = 4,7 - 4 (4 H, m) ; 2,4 - 0,9 (52 H, m)
RMN $^{119}Sn$ ($C_6D_6$, $(CH_3)_4Sn$ interne) δ = - 20,9 ppm ;
IR (film) : ν(CO) = 1735 $cm^{-1}$ (F).

b) - Décomposition du bis [(éthyl-2 hexanoyloxy)-2 éthyl]dibutylétain :
La décomposition est faite comme à l'exemple 1. Elle est terminée au bout de 5 heures à 140 °C. Le produit obtenu est identifié comme étant :
$(C_4H_9)_2$ Sn $[OCOCH(C_2H_5)(C_4H_9)]_2$

Caractéristiques spectrales :
RMN $^1H$ ($CCl_4$, TMS int) δ (ppm) = 2,5 - 0,9 (48 H, m)
RMN $^{119}Sn$ ($C_6D_6$), $(CH_3)_4Sn$ interne) δ = - 154,9 ppm.

- EXEMPLE 6 :

Préparation et décomposition du bis [(éthyl-2 hexanoyloxy)-2 éthyl] dioctylétain :

a) - Préparation du bis [(éthyl-2 hexanoyloxy)-2 éthyl] dioctylétain :
L'addition du dihydrure de dioctylétain sur l'éthyl-2 hexanoate de vinyle se fait de la même façon que celle du dihydrure de dibutylétain (exemple 5).
Elle est totale au bout de 13 heures d'exposition du mélange réactionnel aux rayons ultra-violets.
Le produit obtenu quantitativement est de formule :
$(C_8H_{17})_2$ Sn $[CH_2CH_2OCOCH(C_2H_5)(C_4H_9]_2$

Caractéristiques spectrales :
RMN $^{16}H$ ($CCl_4$, TMS int) δ (ppm) = 4,7 - 4,0 (4 H, m) ; 1,6 - 0,9 (68 H, m)
RMN $^{119}Sn$ ($C_6D_6$), $(CH_3)_4Sn$ interne) δ = 21,7 ppm.

b) - Décomposition du bis [(éthyl-2 hexanoyloxy)-2 éthyl] dioctylétain :
Elle a lieu dans les mêmes conditions que celles de l'homologue en série dibutylée (exemple 5).
Le produit de décomposition a la formule suivante :
$(C_8H_{17})_2$ Sn $[OCOCH(C_2H_5)(C_4H_9)]_2$

Caractéristiques spectrales :
RMN $^1H$ ($CCl_4$, TMS int) δ (ppm) = 2,5 - 0,9 (64 H, m) ;
RMN $^{119}Sn$ ($C_6D_6$), $(CH_3)_4Sn$ interne) δ = - 157,9 ppm.

- EXEMPLE 7 :

Préparation et décomposition du bis(décanoyloxy-2 éthyl)dibutylétain : dénommé également bis(versatoyloxyl-2 éthyl)dibutylétain.

a) - Préparation du versatate de vinyle (dénommé également décanoate de vinyle) :
L'acide versatique ® 10 (Shell) est un mélange d'acides de formule brute $C_{10}H_{20}O_2$ dont au moins 98 % de la masse possède un atome de carbone quaternaire en position alpha de la fonction acide. Le radical $R_3$ de la formule (1) est donc assimilable à un radical nonyle.
Le mode opératoire est le même que pour la préparation du laurate de vinyle. Le versatate de vinyle est obtenu par distillation avec un rendement de 60 %. $H_2C = CHOCOC_9H_{19}$ Eb = 100 °C sous 3,3 KPa.

Caractéristiques spectrales :
RMN $^1H$ ($CCl_4$, TMS int) δ (ppm) = 7,22 - (1 H, dd) ; 4,78 (1 H, dd) ; 4,45 (1 H, dd) ; 2,0 - 0,8 (19 H, m).

b) - Préparation du bis(versatoyloxy-2 éthyl)dibutylétain :
On reprend le mode opératoire de l'exemple 1. La cuve est thermostatée à 0 °C. La solution est exposée aux rayons ultra-violets pendant 2 heures. Le produit attendu est obtenu quantitativement ; sa formule est la suivante :
$(C_4H_9)_2$ Sn $(CH_2CH_2OCOC_9H_{19})_2$

Caractéristiques spectrales :
RMN $^1H$ ($CCl_4$, TMS int) δ (ppm) = 4,5 - 4,0 (4 H, m) ; 2,0 - 0,8 (60 H, m)
RMN $^{119}Sn$ ($C_6D_6$), $(CH_3)_4Sn$ interne) δ = - 22,3 ppm ;
IR (film) : ν(CO) = 1730 $cm^{-1}$ (F).

c) - Décomposition du bis(versatoyloxy-2 éthyl)dibutylétain :
La décomposition est conduite comme à l'exemple 1. A 140 °C, 65 % du produit a disparu au bout de 4 heures (pourcentage estimé par RMN$^{119}$Sn). Le produit de décomposition est le diversatate de dibutylétain :
$(C_4H_9)_2$ Sn $(OCOC_9H_{19})_2$

Caractéristiques spectrales :
RMN $^1H$ ($CCl_4$, TMS int) δ (ppm) = 2,0 - 0,8 (56 H, m) ;
RMN $^{119}Sn$ ($C_6D_6$), $(CH_3)_4Sn$ interne) δ = - 162,6 ppm ;

- EXEMPLE 8 :

Préparation et décomposition du bis(acétoxy-2 méthyl-2 éthyl)dibutylétain :

a) - Préparation du bis(acétoxy-2 méthyl-2 éthyl)dibutylétain :
Le mode opératoire est le même qu'à l'exemple 7 dans le cas de l'addition sur le versatate de vinyle ; il est remplacé ici par 2,002 g (0,02 mole) d'acétate d'isopropényle. Le mélange réactionnel est exposé 3 heures 30 aux rayons ultra-violets, à 0 °C. Le produit obtenu quantitativement a la formule suivante :
$(C_4H_9)_2$ Sn $CH_2CH(CH_3)OCOCH_3$ 2

Caractéristiques spectrales :
RMN $^1H$ ($CCl_4$, TMS int) δ (ppm) = 5,6 - 4,6 (2 H, m) ; 1,95 (6 H, s) ; 1,8 - 0,9 (28 H, m)
RMN $^{119}Sn$ ($C_6D_6$), $(CH_3)_4Sn$ interne) δ = - 24,9 ppm.

b) - Décomposition du bis(acétoxy-2 méthyl-2 éthyl)dibutylétain :

Le produit pur, placé dans un tube à essai, est porté à 80 °C. Au bout d'un quart d'heure la décomposition est terminée. Le diacétate de dibutylétain est obtenu pur. Ses caractéristiques sont indiquées à la fin de l'exemple 1.

- EXEMPLE 9 :

Préparation et décomposition du bis(acétoxy-2 cyano-2 éthyl)dibutylétain :

L'addition du dihydrure de dibutylétain sur l'acétate de cyano-1 vinyle est conduite suivant le mode opératoire de l'exemple 1. L'exposition aux rayons ultra-violets dure 5 heures. Le produit obtenu est identifié comme étant le bis(acétoxy-2 cyano-2 éthyl)dibutylétain, de formule :

$(C_4H_9)_2$ Sn $[CH_2CH(CN)OCOCH_3]_2$

Caractéristiques spectrales :

RMN $^1H$ ($CCl_4$, TMS int) $\delta$ (ppm) = 5,4 (2 H, t) ; 2,1 (6 H, s) ; 1,65 - 0,9 (22 H, m) ;

RMN $^{119}Sn$ ($C_6D_6$), $(CH_3)_4Sn$ interne) $\delta$ = 22,6 ppm.

b) - Décomposition du bis(acétoxy-2 cyano-2 éthyl)dibutylétain :

La décomposition est faite comme à l'exemple 1 à 110 °C, un mélange de diacétate de dibutylétain et d'acrylonitrile est obtenu au bout de 2 heures, sans trace du produit de départ.

Caractéristiques spectrales de l'acrylonitrile :

$H_2C = CH\ CN$

RMN $^1H$ ($CCl_4$, TMS int) $\delta$ (ppm) = 6,4 - 5,4

Pour celles de $(C_4H_9)_2$ Sn $(OCOCH_3)_2$ : voir l'exemple 1.

- EXEMPLE 10 :

Préparation et décomposition du bis(formyloxy-2 éthyl)dibutylétain :

a) - Préparation du formiate de vinyle :

Le mode opératoire suivi est le même que celui de l'exemple 3 pour la préparation du laurate de vinyle. La distillation est faite à l'appareil de Cadiot (colonne à bande tournante de 50 cm). Le produit obtenu a la formule suivante :

$H_2C = CHOCOH$ Eb = 45 °C sous 100 KPa

Caractéristiques spectrales :

RMN $^1H$ ($CCl_4$, TMS int) $\delta$ (ppm) = 8,05 (1 H, s) ; 7,32 (1 H, dd) ; 4,95 (1 H, dd) ; 4,65 (1 H, dd).

b) - Préparation et décomposition du bis(formyloxy-2 éthyl)dibutylétain :

L'addition du dihydrure de dibutylétain sur le formiate de vinyle est faite dans une tube en pyrex® à 30-35 °C en suivant le mode opératoire de l'exemple 5. Le produit n'est pas isolé car il se décompose au fur et à mesure de sa formation.

Seules les caractéristiques spectrales du diformiate de dibutylétain sont mentionnées ici : $(C_4H_9)_2$ Sn $(OCOH)_2$

RMN $^1H$ ($C_6D_6$, TMS int) $\delta$ (ppm) = 8,25 (2 H, s) ; 1,8 - 0,9 (18 H, m) ;

RMN $^{119}Sn$ ($C_6D_6$), $(CH_3)_4Sn$ interne) $\delta$ = - 102,5 ppm.

- EXEMPLE 11 :

Préparation et décomposition du bis(acétoxy-2 éthyl)diphénylétain :

a) - Préparation du dihydrure de diphénylétain :

Le mode opératoire suivi est le même que celui utilisé à l'exemple 1 pour la synthèse du dihydrure de dibutylétain. Le produit est fragile ; il nécessite une distillation dans une verrerie propre (rodages non graissés). Celle-ci est faite au kugelrohr, sous un vide de 0,27 KPa, à 100-110 °C (température du four).

b) - Préparation du bis(acétoxy-2 éthyl)diphénylétain :

Dans un tube en pyrex ®, contenant du cyclohexane anhydre, sont introduits en quantité stoechiométrique du dihydrure de diphénylétain et de l'acétate de vinyle. Le mélange réactionnel est exposé aux rayons ultra-violets pendant 1 heure à 30 °C. Le solvent est ensuite éliminé sous vide, à température ambiante. Le produit obtenu quantitativement a la formule suivante :

$(C_6H_5)_2$ Sn $(CH_2CH_2OCOCH_3)_2$

Caractéristiques spectrales :
RMN $^1H$ ($CCl_4$, TMS int) δ (ppm) = 7,6 - 6,9 (10 H, m) ; 4,75 - 3,7 (4 H, m) ; 1,75 = 0,9 (10 H, m).

c) - Décomposition du bis(acétoxy-2 éthyl)diphénylétain :

La décomposition du produit pur est terminée au bout de 1 heure à 150 °C, et conduit au diacétate de diphénylétain de formule :
$(C_6H_5)_2$ Sn $(OCOCH_3)_2$

Caractéristiques spectrales :
RMN $^1H$ ($CCl_4$, TMS int) δ (ppm) = 7,9 - 7,0 (10 H, m) ; 1,8 (6 H, s) ;

- EXEMPLE 12 :

Préparation et décomposition du bis(lauroyloxy-2 éthyl)diphénylétain :

a) - Préparation du bis(lauroyloxy-2 éthyl)diphénylétain :

Le produit est obtenu dans les mêmes conditions que précédemment à l'exemple 12. Le produit a la formule suivante :
$(C_6H_5)_2$ Sn $(CH_2CH_2OCOC_{11}H_{23})_2$

Caractéristiques spectrales :
RMN $^1H$ ($CCl_4$, TMS int) δ (ppm) = 7,5 - 6,9 (10 H, m) ; 4,75 - 3,7 (4 H, m) ; 2,2 - 0,75 (50 H, m).

b) - Décomposition du bis(lauroyloxy-2 éthyl)diphénylétain :

Au bout de 1 heure à 150 °C, le produit a disparu ; le dilaurate de diphénylétain est obtenu :
$(C_6H_5)_2$ Sn $(OCOC_{11}H_{23})_2$

Caractéristiques spectrales :
RMN $^1H$ ($CCl_4$, TMS int) δ (ppm) = 7,75 - 7,0 (10 H, m) ; 2,2 - 0,75 (46 H, m) ;

- EXEMPLE 13 :

On homogénéise le mélange suivant :
- 90 parties d'une gomme (α,ω-dihydroxy)polydiméthylsiloxane de viscosité 30.10$^6$ mPa.s,
- 210 parties d'une huile (α,ω-dihydroxy)polydiméthylsiloxane de viscosité 100 mPa.s,
- 14 parties d'un polyhydrogénométhylsiloxane à terminaison triméthylsiloxyle de viscosité 20 mPa.s,
- 686 parties de xylène,

a 1 000 parties de bain ci-dessus, on ajoute 4 000 parties d'hexane.

Au 5 000 parties de composition obtenue on ajoute :
- 20 parties d'un produit formé par addition mole à mole de γ-aminopropyltriéthoxysilane et de γ-glycidoxypropyltriméthoxysilane,
- 1,75 partie de bis(acétoxy-2 éthyl)dibutylétain préparé à l'exemple 1.

On agite vigoureusement, à température ambiante (20 °C), le mélange pendant quelques minutes et on dépose ensuite ce mélange (environ de 1 à 3 g/m$^2$) sur du papier Glacine Sibille ® 9 562 au moyen d'une barre d'enduction de Meyer n° 10 et on fait durcir la composition silicone 30 secondes dans un four à circulation d'air forcé réglé à 150 °C. La réticulation est totale et d'excellente qualité.

EXEMPLES 14 A 15 ET EXEMPLE COMPARATIF 16 :

On répète exactement le mode opératoire de l'exemple 13 sauf que :
- à l'exemple 14 : on remplace les 1,75 parties du catalyseur latent de l'exemple 13 par 1,85 partie de bis(acétoxy-2 méthyl-2 éthyl)dibutylétain préparé à l'exemple 8,
- à l'exemple 15 : on remplace les 1,75 parties du catalyseur latent de l'exemple 13 par 2,95 parties de bis(lauroyloxy-2 éthyl)dibutylétain préparé à l'exemple 3,
- à l'exemple 16 : on remplace les 1,75 parties du catalyseur latent de l'exemple 13 par 2,45 parties de bis (éthyl-2 hexanoyloxy)-2 éthyl dibutylétain préparé à l'exemple 5,
- à l'exemple comparatif 16 : on remplace les 1,75 parties du catalyseur latent de l'exemple 13 par 1,50 partie de dicarboxylate de dibutylétain.

Comme dans l'exemple 13, la réticulation est totale et d'excellente qualité et analogue pour des quantités équimolaires de composé d'étain.

- EXEMPLE 17

Cet exemple illustre le "pot-life" obtenu avec les catalyseurs latents et le catalyseur actif correspondant sur la composition résultant du mélange à l'air ambiant de :

- 23 parties d'huile α,ω-dihydroxypolydiméthylsiloxane, de viscosité 14 000 mPa.s,
- 1 partie d'une huile polyhydrogénométhylsiloxane à terminaisons triméthylsiloxyle de viscosité 20 mPa.s,
- 0,712 millimole de composé à l'étain X.

On détermine la stabilité des mélanges à l'air ambiant en mesurant le temps nécessaire à chacun des mélanges pour atteindre 150 000 mPa.s à 20 °C. On utilise pour cela un rhéomètre CARRI-MED® sur lequel est adapté un système cône/plaque thermostaté à 20 °C.

Les résultats obtenus sont rassemblés dans le tableau ci-après.

TABLEAU

| COMPOSE A L'ETAIN | TEMPS (heures) |
|---|---|
| $(C_4H_9)_2$ $Sn(OCOCH_3)_2$ | 0,10 |
| $(C_4H_9)_2$ $Sn(CH_2CH_2OCOCH_3)_2$ | 312 |
| $(C_4H_9)_2$ $Sn(CH_2CH(CH_3)OCOCH_3)_2$ | 20 |
| $(C_4H_9)_2$ $Sn(OCOC_{11}H_{23})_2$ | 0,13 |
| $(C_4H_9)_2$ $Sn(CH_2CH_2OCOC_{11}H_{23})_2$ | 132 |
| $(C_4H_9)_2$ $[Sn\ OCOCH(C_2H_5)(C_4H_9)]_2$ | 0,27 |
| $(C_4H_9)_2$ $[Sn\ CH_2CH_2OCOCH(C_2H_5)(C_4H_9)]_2$ | 228 |
| 0 | 330 |

Du tableau il apparaît que les mélanges comportant un catalyseur latent selon l'invention présentent un "pot-life" qui peut être très voisin du mélange témoin sans catalyseur (330 heures) et toujours très supérieur aux mélanges contenant leur produit de décomposition thermique.

**Revendications**

1. - Composition polyorganosiloxane caractérisée en ce qu'elle comporte :

A. - 100 parties en poids d'un polydiorganosiloxane à extrémités silanol,

B. - 0,1 à 25 parties en poids d'un polyorganohydrogénosiloxane ayant au moins 3 groupes SiH par molécule,

C. - une quantité catalytiquement efficace d'un catalyseur latent à l'étain de formule :

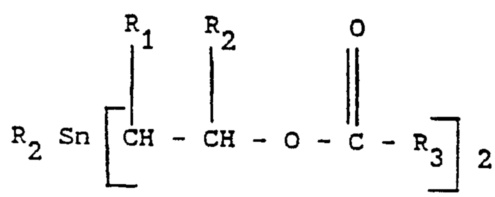

(1)

dans laquelle :

- les radicaux R, identiques ou différents, sont choisis parmi un radical alkyle linéaire ou ramifié en $C_1$-$C_{20}$, un radical aryle mononucléaire, arylalkyle et alkylaryle, dont la partie alkyle est en $C_1$-$C_6$,
- les radicaux $R_1$ et $R_2$, identiques ou différents, sont choisis parmi un atome d'hydrogène, un radical cyano, un radical alkyle en $C_1$-$C_6$, un radical alcoxycarbonyle dont la partie alkyle est en $C_1$-$C_6$ et $R_1$ et $R_2$ peuvent former ensemble un cycle hydrocarboné saturé ayant de 5 à 8 atomes de carbone,
- le radical $R_3$ est choisi parmi un atome d'hydrogène et un radical alkyle en $C_1$-$C_{20}$ linéaire ou ramifié.

2. - Composition selon la revendication 1, caractérisée en ce au'elle comporte de 0,001 à 6 parties en poids de catalyseur latent (C) pour 100 parties en poids d'extraits secs de la somme des polymères (A) et (B).

3. - Composition selon les revendications 1 ou 2, caractérisée en ce qu'elle est sans solvant et en ce que la viscosité des constituants (A) et (B) est choisie de telle sorte que la viscosité de la composition soit comprise entre 40 et 5 000 mPa.s.

4. - Composition selon les revendications 1 ou 2, caractérisée en ce qu'elle est en solution dans un solvant organique.

5. - Composition selon les revendications 1 ou 2, caractérisée en ce qu'elle est sous la forme d'une émulsion aqueuse.

6. - Procédé permettant de rendre des feuilles de matériau souple non adhérentes à des surfaces

auxquelles elles adhéreraient normalement, caractérisé en ce qu'il consiste à appliquer une quantité comprise entre 0,1 et 10 g par $m^2$ de surface à revêtir, d'une composition telle que définie à l'une quelconque des revendications 1 à 5 puis à réticuler la composition au moins égale à la température de décomposition du catalyseur latent (C).

7. - Matériaux souples enduits par une composition réticulée telle que définie à l'une quelconque des revendications 1 à 5.

Office européen des brevets

# RAPPORT DE RECHERCHE EUROPEENNE

Numero de la demande

EP 89 42 0138

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.4) |
| A | GB-A-2 005 288 (SHIN-ETSU)<br>* le document en entier *<br>----- | 1-7 | C 08 L 83/04<br>C 08 K 5/57<br>C 09 J 7/04 |
| | | | **DOMAINES TECHNIQUES RECHERCHES (Int. Cl.4)** |
| | | | C 08 K 5/00<br>C 08 L 83/00<br>C 09 J 7/00 |

Le présent rapport a été établi pour toutes les revendications

| Lieu de la recherche | Date d'achèvement de la recherche | Examinateur |
|---|---|---|
| BERLIN | 19-06-1989 | HOEPFNER W.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)